# EUROPÄISCHE PATENTSCHRIFT

(11) **EP 1 432 658 B1**
(45) Veröffentlichungstag und Bekanntmachung des Hinweises auf die Patenterteilung: **16.02.2005**
(21) Anmeldenummer: 02785151.8
(22) Anmeldetag: 02.10.2002
(51) Int. Cl.: C03B 40/04

(54) **VERFAHREN UND VORRICHTUNG ZUM KONTAKTLOSEN FORMGEBEN VON SCHMELZFLÜSSIGEN GLASPOSTEN**
METHOD AND DEVICE FOR NON-CONTACT MOULDING OF FUSED GLASS GOBS
PROCEDE ET DISPOSITIF DE MOULAGE SANS CONTACT DE PARAISONS FUSIBLES

(30) Priorität: 06.10.2001 DE 10149400
(43) Veröffentlichungstag der Anmeldung: 30.06.2004
(73) Patentinhaber: Schott AG, 55122 Mainz (DE); Fraunhofer-Gesellschaft zur Förderung der angewandten Forschung e.V., 80686 München (DE)
(72) Erfinder: LANGSDORF, Andreas, 55218 Ingelheim (DE); GREULICH-HICKMANN, Norbert, 55127 Mainz (DE); ADLER, Jörg, 01662 Meissen (DE); PIWONSKI, Michael, 70197 Stuttgart (DE)
(74) Vertreter: Dr. Weitzel & Partner
(86) Internationale Anmeldenummer: PCT/EP2002/011080
(87) Internationale Veröffentlichungsnummer: WO 2003/031358

(56) Entgegenhaltungen:
- DE-A- 10 045 373
- BANIEL P ET AL: "Gas Film Levitation: a unique containerless technique for the preparation of fluoride glass rods" JOURNAL OF NON-CRYSTALLINE SOLIDS, NORTH-HOLLAND PHYSICS PUBLISHING. AMSTERDAM, NL, Bd. 161, Nr. 1, 1. August 1993 (1993-08-01), Seiten 1-6, XP000496901 ISSN: 0022-3093
- PATENT ABSTRACTS OF JAPAN vol. 2000, no. 14, 5. März 2001 (2001-03-05) -& JP 2000 319023 A (FUJI PHOTO OPTICAL CO LTD), 21. November 2000 (2000-11-21)
- PATENT ABSTRACTS OF JAPAN vol. 1997, no. 09, 30. September 1997 (1997-09-30) & JP 09 132417 A (HOOYA PRECISION KK), 20. Mai 1997 (1997-05-20) & US 6 334 335 B1 (HIROTA ET AL) 1. Januar 2002 (2002-01-01)
- PATENT ABSTRACTS OF JAPAN vol. 1996, no. 05, 31. Mai 1996 (1996-05-31) -& JP 08 012353 A (OLYMPUS OPTICAL CO LTD), 16. Januar 1996 (1996-01-16)
- PATENT ABSTRACTS OF JAPAN vol. 1998, no. 01, 30. Januar 1998 (1998-01-30) & JP 09 235124 A (CANON INC), 9. September 1997 (1997-09-09)
- PATENT ABSTRACTS OF JAPAN vol. 017, no. 236 (C-1057), 13. Mai 1993 (1993-05-13) & JP 04 367526 A (OLYMPUS OPTICAL CO LTD), 18. Dezember 1992 (1992-12-18)
- PATENT ABSTRACTS OF JAPAN vol. 2000, no. 04, 31. August 2000 (2000-08-31) & JP 2000 001321 A (CANON INC), 7. Januar 2000 (2000-01-07)
- PATENT ABSTRACTS OF JAPAN vol. 010, no. 161 (C-352), 10. Juni 1986 (1986-06-10) & JP 61 014146 A (HOOYA KK), 22. Januar 1986 (1986-01-22)
- PATENT ABSTRACTS OF JAPAN vol. 1997, no. 02, 28. Februar 1997 (1997-02-28) & JP 08 259242 A (HOOYA PRECISION KK), 8. Oktober 1996 (1996-10-08)

## Beschreibung

Die Erfindung betrifft ein Verfahren und eine Vorrichtung zum Erzeugen von Gegenständen aus Glas unter Anwendung des sogenannten Levitationsverfahrens. Dabei wird ein Vorformling aus Glas oder Glaskeramik mittels eines Formgebungswerkzeuges ausgeformt, das als poröse Membran ausgebildet ist und einen Gasanschluß aufweist. Mittels des Gasanschlusses wird zwischen der dem Vorformling zugewandten Fläche der Levitationsform und dem Vorformling selbst ein Gaspolster aufgebaut. Dieses vermeidet einen umittelbaren Kontakt zwischen Vorformling und Levitationsform. Dies hat zahlreiche Vorteile. So wird unter anderem das Verkleben des Glases an der Formfläche der Levitationsform vermieden.

EP 070 760 A zeigt und beschreibt ein Verfahren sowie eine Vorrichtung zum Herstellen eines Formlings aus Glas. Dabei wird ein Posten der heißen Schmelze in eine Form überführt. Die Form ist als Levitationsform ausgebildet; die Wände der Form sind somit porös. An die Levitationsform ist ein Druckgas angeschlossen, das aus den Poren der Levitationsform unterhalb des Vorformlings austritt und somit einen Kontakt zwischen diesem und der formgebenden Fläche unterbindet.

Bei einer solchen kontaktlosen Formgebung von schmelzflüssigen Glasposten mittels Gaslevitation ist eine möglichst homogene Temperaturverteilung im Glas eine wichtige Bedingung für eine einwandfreie Qualität des fertigen Erzeugnisses. Dies trifft insbesondere dann zu, wenn hochwertige Gläser hergestellt werden, zum Beispiel für optische Anwendungen.

Dieses Ziel wird häufig nicht erreicht. Die Temperaturverteilung im Glas ist keineswegs immer homogen. Dies geht zu einem wesentlichen Teil darauf zurück, dass die Levitationsform dem Glasposten ein Teil der darin enthaltenen Wärme entzieht, insbesondere durch Strahlung, und dass dieser Wärmeentzug in unkontrollierter Weise vor sich geht. Die Unterschiede können von Glasposten zu Glasposten auftreten, beeinflußt durch unterschiedliche Massen dieser Glasposten. Unterschiede des Wärmeentzuges können aber auch auftreten innerhalb eines Glaspostens, bedingt dadurch, dass die Levitationsform an manchen Stellen dicker und an anderen dünner ist, bedingt durch die für die Formgebung notwendige Gestalt der Levitationsform.

Baniel P ET AL: Gas Film Levitation: a unique containerless technique for the preparation of fluoride glass rods JOURNAL OF NON-CRYSTALLINE SOLIDS, NORTH-HOLLAND PHYSICS PUBLISHING. AMSTERDAM, NL, Bd. 161, Nr. 1, 1. August 1993 (1993-08-01), Seiten 1-6, XP 000496901 ISSN: 0022-3093 beschreibt eine Vorrichtung gemäß dem Oberbegriff von Anspruch 1 sowie ein Verfahren gemäß dem Oberbegriff von Anspruch 9. Dabei wird das Formgebungswerkzeug mittels einer Hochfrequenzspule induktiv erhitzt. Verfahren und Vorrichtung sind jedoch kompliziert und kostenintensiv.

Gleiches gilt für Verfahren und Vorrichtung, so wie bekannt aus PATENT ABSTRACTS OF JAPAN vol. 1996, no. 05, 31. Mai 1996 (1996-05-31) -& JP 08 012353 A (OLYMPUS OPTICAL CO LTD), 16. Januar 1996 (1996-01-16).

Der Erfindung liegt die Aufgabe zugrunde, ein Verfahren und eine Vorrichtung anzugeben, womit sich eine möglichst gleichmäßige Temperaturverteilung innerhalb eines Glaspostens bei Anwendung des Levitationsverfahrens erzielen lässt.

Diese Aufgabe wird durch die Merkmale der unabhängigen Ansprüche gelöst. Der wesentliche Gedanke der Erfindung besteht somit darin, die Levitationsform direkt über seinen eigenen elektrischen Widerstand elektrisch zu beheizen, somit nicht indirekt.

Die Erfinder haben folgendes erkannt: Eine indirekte Beheizung, beispielsweise durch eine elektrische Heizwendel, vermag das Problem nicht grundsätzlich zu lösen, weil die poröse Form in der Regel ein relativ guter Wärmeisolator ist, und weil eine außen angebrachte Heizwendel oder dergleichen demgemäß auch nur die Außenseite der Form erwärmen kann; die Innenseite der Levitationsform hingegen entzieht dem Glasposten weiterhin Wärme.

Durch die Erfindung werden vor allem die Strahlungsveriuste kompensiert, die durch Abgabe von Wärme vom Glasposten an das Formgebungsmaterial der Levitationsform entstehen. Das Formgebungsmaterial lässt sich nämlich durch eine entsprechende Regelung der erfindungsgemäßen Heizeinrichtung auf der Temperatur des Glaspostens halten - gegebenenfalls auch auf einem hiervon abweichenden Temperaturwert. Glasposten und Levitationsform können somit in kontrollierter und synchroner Weise abgekühlt werden, das heißt mit ein und der selben Temperatur-Zeit-Kurve. Auf diese Weise werden temperaturbedingte Inhomogenitäten im Glas völlig vermieden.

Zur Durchführung der Erfindung wird das Formgebungsmaterial durch Anlegen einer elektrischen Spannung aufgeheizt.

Als Formgebungsmaterial für die Gaslevitation kommen grundsätzlich alle jene Materialien in Betracht, die porös und ausreichend hitzebeständig sind. Hier sind beispielsweise zu nennen: Graphit, Kohlenstoff, Keramik, Metall. Besonders gut geeignet sind poröse Keramiken auf der Basis von Siliciumcarbid mit einstellbarer elektrischer Leitfähigkeit.

Das Formgebungsmaterial muß offenporig sein, damit ein Gasstrom durch die Poren hindurchgesetzt werden kann, der an den Formgebungsflächen austritt. Dabei muß nicht die gesamte Levitationsform aus offenporigem Material bestehen.

Vielmehr genügt es, wenn lediglich jene Bereiche porös sind, die an die Formgebungsflächen angrenzen und diese bilden.

Die Erfindung ist z. 8. anwendbar zum Herstellen sogenannter Gobs aus Glas. Solche Gobs dienen als Zwischenprodukt für optische Gegenstände wie Linsen. Sie werden beispielsweise erzeugt durch Abtropfen definierter Glasmengen aus einer Glasschmelze. Es kommen aber auch Glaskörper in Betracht, die als Zwischenprodukte hergestellt wurden, hierbei erkalten und die anschließend wieder aufgewärmt werden, um einem Umformungsprozeß in einer Levitationsform unterworfen zu werden. Der hier verwendete Ausdruck "Vorformling" ist somit im weitesten Sinne zu verstehen.

Die Erfindung ist anhand der Zeichnung näher erläutert. Darin ist im einzelnen folgendes dargestellt:

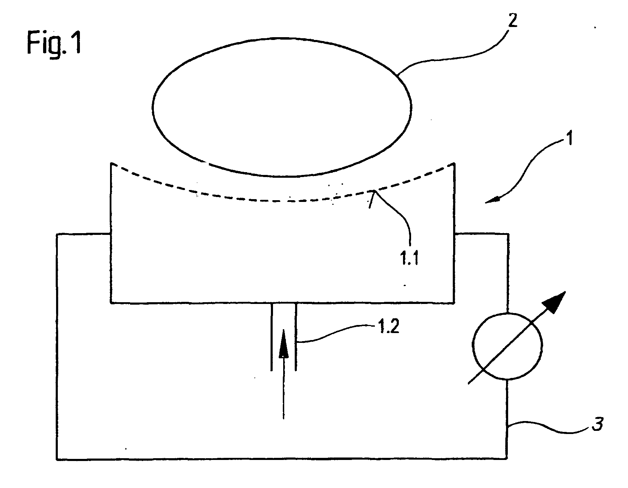

- Figur 1: zeigt in einer schematischen Ansicht eine Levitationsform mit einem hierin befindlichen Glasgob.

Die in Figur 1 dargestellte Leviationsform 1 besteht aus offenporigem Material - im vorliegenden Falle aus Siliciumcarbid mit einstellbarer elektrischer Leitfähigkeit.

Über der muldenförmigen Formgebungsfläche 1.1 der Levitationsform 1 befindet sich ein Glasgob 2. Die Levitationsform 1 weist einen Gasanschluß 1.2 auf. Wird Gas durch den Gasanschluß 1.2 eingeleitet, so tritt dieses durch die Poren der Levitationsform 1 hindurch, tritt an der Formgebungsfläche 1.1 aus, und hält den Glasgob 2 in der Schwebe.

An die Levitationsform ist ein Stromkreis 3 angeschlossen. Mittels diesem lässt sich die Levitationsform 1 aufheizen. Die in der Levitationsform erzielte Temperatur ist durch entsprechende Einstellung des Stromes in der Heizeinrichtung 3 einstellbar.

Hierbei wird das Formgebungsmaterial über seinen eigenen Widerstand elektrisch beheizt. Dabei lässt sich das Material im Hinblick auf den ihm eigenen elektrischen Widerstand in geeigneter Weise auswählen.

Eine besonders interessante Ausführungsform besteht darin, die Heizeinrichtung derart zu gestalten und anzuordnen, dass gewisse Volumensegmente der Levitationsform jeweils getrennt beheizbar sind. Durch eine solche Segmentierung lassen sich mögliche Unterschiede des Entzuges von Wärme vom Vorformling zur Levitationsform ausgleichen.

## Patentansprüche

1. Vorrichtung zum kontaktlosen Formgeben von Posten aus Glas oder aus Glaskeramik;
1.1 mit einer Levitationsform (1), die wenigstens im Bereich ihrer formgebenden Fläche (1.1) aus offenporigem Material besteht;
1.2 mit einem Gasanschluss (1.2) zum Einleiten eines Gases durch den offenporigen Bereich bis zur formgebenden Fläche (1.1) zwecks Aufbaus eines Gaspolsters zwischen dem Formgebungswerkzeug (1) und dem Vorformling (2);
1.3 mit einer Heizeinrichtung (3) zum direkten Beheizen des Materiales des Formgebungswerkzeuges (1), **dadurch gekennzeichnet, dass**
1.4 das Formgebungswerkzeug (1) derart an einen Stromkreis (3) angeschlossen ist, dass es über seinen eigenen elektrischen Widerstand elektrisch aufgeheizt wird

2. Vorrichtung nach Anspruch 1, **dadurch gekennzeichnet, dass** die Heizeinrichtung sektioniert ist, so dass verschiedene Bereiche oder Volumeneinheiten des Formgebungswerkzeuges (1) auf unterschiedliche Temperaturen aufheizbar sind.

3. Vorrichtung nach Anspruch 1 oder 2, **dadurch gekennzeichnet, dass** der Heizeinrichtung (3) Regeleinrichtungen zugeordnet sind, um eine Abkühlung des Vorformlings (2) sowie des Formgebungsmateriales entsprechend ein und der selben Temperatur-Zeit-Kurve zu erzielen.

4. Vorrichtung nach einem der Ansprüche 1 bis 3, **dadurch gekennzeichnet, dass** das Formgebungsmaterial eine offenporige Keramik ist.

5. Vorrichtung nach einem der Ansprüche 1 bis 4, **dadurch gekennzeichnet, dass** das Formgebungsmaterial Siliciumcarbid ist.

6. Vorrichtung nach einem der Ansprüche 1 bis 4, **dadurch gekennzeichnet, dass** das Formgebungsmaterial ein poröses Metall ist.

7. Vorrichtung nach Anspruch 6, **dadurch gekennzeichnet, dass** das Formgebungsmaterial Sintermetall ist.

8. Vorrichtung nach einem der Ansprüche 1 bis 3, **dadurch gekennzeichnet, dass** das Formgebungsmaterial poröser Graphit oder poröser Kohlenstoff ist.

9. Verfahren zum kontaktlosen Formgeben von Glas- oder Glaskeramikposten mittels Gaslevitation, mit den folgenden Verfahrensschritten:
9.1 es wird ein Vorformling (2) erzeugt;
9.2 der Vorformling (2) wird einem Formgebungswerkzeug (1) angenähert, das wenigstens auf seinem, dem Vorformling zugewandten Bereich offenporig und an eine Gasdruckquelle zum Erzeugen eines Gaspolsters zwischen dem Formgebungswerkzeug (1) und dem Vorformling (2) angeschlossen ist;
9.3 das Formgebungswerkzeug (1) wird wenigstens während eines Teiles der Formgebungsphase direkt beheizt,
9.4 **dadurch gekennzeichnet, dass** eine Vorrichtung gemäß einem der Ansprüche 1 bis 8 verwendet wird.

## Claims

1. An apparatus for the contactless shaping of items made of glass or glass ceramics;
1.1 with a levitating mold (1) which consists of open-pored material at least in the region of its shaping surface (1.1);
1.2 with a gas connection (1.2) for introducing a gas through the open-pored region up to the shaping surface (1.1) for the purpose of building a gas cushion between the shaping tool (1) and the preform (2);
1.3 with a heating device (3) for direct heating of the material of the shaping tool (1), **characterized in that**
1.4 the shaping tool (1) is connected to an electric circuit (3) in such a way that it is electrically heated through its own electric resistance.

2. An apparatus according to claim 1, **characterized in that** the heating device is sectioned, so that various regions or volume units of the shaping tool (1) can be heated to different temperatures.

3. An apparatus according to claim 1 or 2, **characterized in that** the heating device (3) is associated with control devices in order to achieve a cooling of the preform (2) and the shaping material according to one and the same temperature/time curve.

4. An apparatus according to one of the claims 1 to 3, **characterized in that** the shaping material is an open-pored ceramic material.

5. An apparatus according to one of the claims 1 to 4, **characterized in that** the shaping material is silicon carbide.

6. An apparatus according to one of the claims 1 to 4, **characterized in that** the shaping material is a porous metal.

7. An apparatus according to claim 6, **characterized in that** the shaping material is a sintered metal.

8. An apparatus according to one of the claims 1 to 3, **characterized in that** the shaping material is porous graphite or porous carbon.

9. A method for the contactless shaping of glass or glass ceramic items by means of gas levitation, comprising the following method steps:
9.1 a preform (2) is produced;
9.2 the preform (2) is advanced to a shaping tool (1) which is open-pored at least in its region facing the preform and is connected to a gas pressure source for producing a gas cushion between the shaping tool (1) and the preform (2);
9.3 the shaping tool (1) is directly heated at least during a part of the shaping phase;
9.4 **characterized in that** an apparatus according to one of the claims 1 to 8 is used.

## Revendications

1. Dispositif de façonnage sans contact de paraisons en verre ou en vitrocéramique ;
1.1 avec une forme de lévitation (1) qui est composée au moins dans la zone de sa surface de façonnage (1.1) d'un matériau à pores ouverts ;
1.2 avec un raccord de gaz (1.2) pour l'introduction d'un gaz dans la zone à pores ouverts jusqu'à la surface de façonnage (1.1) à des fins de production d'un matelas gazeux entre l'outil de façonnage (1) et la paraison (2) ;
1.3 avec un appareil de chauffage (3) pour le chauffage direct du matériau de l'outil de façonnage (1), **caractérisé en ce que**,
1.4 l'outil de façonnage (1) est raccordé à un circuit électrique de telle sorte qu'il est chauffé électriquement par sa propre résistance électrique.

2. Dispositif selon la revendication 1, **caractérisé en ce que** l'appareil de chauffage est sectionné de telle manière que différentes zones ou unités de volume de l'outil de façonnage (1) peuvent être chauffées à des températures variables.

3. Dispositif selon la revendication 1 ou 2, **caractérisé en ce que** des systèmes régulateurs sont affectés à l'appareil de chauffage (3), afin d'obtenir un refroidissement de la paraison (2) et du matériau de façonnage selon une et même courbe de température/temps.

4. Dispositif selon une des revendications 1 à 3, **caractérisé en ce que** le matériau de façonnage est une céramique à pores ouverts.

5. Dispositif selon une des revendications 1 à 4, **caractérisé en ce que** le matériau de façonnage est du carbure de silicium.

6. Dispositif selon des revendications 1 à 4, **caractérisé en ce que** le matériau de façonnage est un métal poreux.

7. Dispositif selon la revendication 6, **caractérisé en ce que** le matériau de façonnage est du métal fritté.

8. Dispositif selon une des revendications 1 à 3, **caractérisé en ce que** le matériau de façonnage est du graphite poreux ou du carbone poreux.

9. Procédé de façonnage sans contact de paraisons en verre ou en vitrocéramique au moyen de la lévitation gazeuse, comprenant les étapes de procédé suivantes :
9.1 une paraison (2) est produite ;
9.2 la paraison (2) est approchée d'un outil de façonnage (1) qui est raccordé au moins dans sa zone dirigée vers la paraison, à pores ouverts, et à une source de pression gazeuse pour la production d'un matelas gazeux entre l'outil de façonnage (1) et la paraison (2) ;
9.3 l'outil de façonnage (1) est directement chauffé au moins pendant une partie de la phase de façonnage ;
9.4 **caractérisé en ce qu'**un dispositif est utilisé selon une des revendications 1 à 8.
